# EUROPEAN PATENT SPECIFICATION

(11) **EP 2 301 647 B1**
(45) Date of publication and mention of the grant of the patent: **06.01.2016**
(21) Application number: 08757715.1
(22) Date of filing: 13.06.2008
(51) Int. Cl.: B01D 53/50, B01D 53/14, B01D 53/18, B01D 53/78

(54) **WASHING DEVICE AND WASHING METHOD FOR MARINE EXHAUST FLUE GASES**
WASCHVORRICHTUNG UND WASCHVERFAHREN FÜR SCHIFFSAUSPUFFRAUCHGASE
DISPOSITIF ET PROCÉDÉ DE LAVAGE POUR GAZ DE COMBUSTION D'ÉCHAPPEMENT MARIN

(43) Date of publication of application: 30.03.2011
(73) Proprietor: Peng, Sigan, Hubei 430072 (CN)
(72) Inventor: Peng, Sigan, Hubei 430072 (CN)
(74) Representative: von Kreisler Selting Werner - Partnerschaft von Patentanwälten und Rechtsanwälten mbB
(86) International application number: PCT/CN2008/071304
(87) International publication number: WO 2009/149602

(56) References cited:
- EP-A1- 1 857 169
- WO-A1-92/08541
- CN-A- 1 236 663
- CN-A- 101 288 823
- CN-Y- 2 220 590
- CN-Y- 2 431 943
- US-A- 3 285 711
- US-A- 3 781 407
- US-A- 3 899 099
- US-A- 3 929 434
- US-A- 4 085 194
- US-A- 4 455 339

## Description

### Field of the invention

This invention relates to a ship flue gas scrubbing apparatus and scrubbing method, in which seawater is used to scrub and reduce pollutant discharge, mainly sulfur dioxide, from marine shipping. It belongs to the technical fields of atmospheric environmental protection and flue gas pollution prevention and control for the marine shipping.

### Description of related art

In the past 20 years, international legislations about the reduction of gaseous pollutants, mainly the sulfur dioxide, discharged from facilities of emission-reduction industries are getting stricter and more mature. In recent years the targets of restriction have been extended from land-based industrial facilities to sea-based shipping.

After the sulfur dioxide reduction issue was brought out world widely, a trend appeared soon to pay great attention the flue gas desulphurization (FGD) technologies with seawater. In 2007, a research report from an allied institution of four internationally well-known universities clearly expressed that: using the ocean resources, i.e., the seawater, to realize the SO₂ emission reduction in ships is again an expectation that people have been pursuing for a long time but has not been realized.

The research report from the allied institution of Massachusetts Institute of Technology, University of Tokyo, Chalmers University of Technology, and Swiss Federal Institute of Technology Zurich is entitled "Seawater scrubbing - reduction of SOx emissions from ship exhausts" (ISBN: 978-91-976534-1-1), and the research report concluded that "seawater scrubbing is a promising technology for reducing sulfur oxide emissions from ships....would therefore require detailed case studying....Further research would be needed to reach a conclusion".

Compared to the emission reduction in the land-based coal-fired industrial facilities, in the situation of flue gas treatment for sea-based shipping with a flue gas temperature as high as 200°C to 490°C,, the FGD processing apparatus specially used in ships must be evaluated for its practicality, with more emphasis on profitability. That is, the total cost of ship FGD apparatus must be significantly lower than the total cost saved by substituting low-sulfur fuels, otherwise, the apparatus is not practical. A number of problems on profitability and efficiency in the prior art have not been solved.

Prior Art 1: a Chinese patent application No. 200710012371.1, entitled "apparatus and method for treating ship exhausts by seawater scrubbing", published on January 16,2008. The technical solution is that in a hollow fiber membrane contactor used as a scrubber, the ship exhaust after dust removal pretreatment is scrubbed with seawater. A control system composed of a SO₂ consistency monitor, a water quality monitor and a PLC programming controller detects and records in real time the SO₂ concentration and water discharge quality in the processed ship exhaust, and controls the water discharge. There exist the following problems:

1) In the technical solution a hollow fiber membrane contactor is used to realize the scrubbing function. However, the hollow fiber membrane can only tolerate tens of centigrade in temperature, and cannot be used for processing flue gas discharged from ship engines with a temperature as high as 200-490°C.

2) The pressure drop and resistance are very large if in the scrubber a hollow fiber membrane contactor is used for scrubbing. If an additional booster fan is installed, the operation cost and energy consumption would be quite high.

Prior Art 2: US Patent No. 7,056,367 issued on June 6, 2006, entitled "Method and apparatus for scrubbing gases, using mixing vanes". This invention discloses a scrubber for exhaust gas composed of a series of nested counter-flow passages including a hot plenum having a star-shaped section. The Exhaust gas from the hot plenum surges through a liquid bath and flows in a reverse direction through an inclined array of flat, overlapping, spaced mixing vanes, causing turbulence in the exhaust gas and forming highly dispersed tiny bubbles, which accelerates the entry of gaseous pollutants into the scrubbing liquid. Mist eliminator vanes remove entrained liquids from the exhaust gases. The hot plenum reheats the exhaust gases to an unsaturated level. The scrubbing significantly and effectively reduces particulate matter and the pollutants such as sulfur dioxide and nitrogen dioxide in the exhaust gases, and reduces heat as well. The details are given hereinbelow.

The technical solution of the invented apparatus of US 7,056,367 is a scrubber device for reducing of gaseous particulates and contaminants discharged from industrial facilities, which includes: 1) a co-axial nested inlet conduit, a hot conduit, an outlet conduit, an counter-flow passage of the exhaust gas, and a tank containing a scrubbing liquid; 2) wherein ends of the heat conduit and the outlet conduit are interconnected and immersed in the scrubbing liquid in the tank, whereby the exhaust gas passes through the liquid bath; 3) one or more mixing vanes, and one or more horizontal mist eliminator vanes; 4) said mixing vanes are located inside the immersed end of the outlet conduit, and are adapted to generate a turbulence in the exhaust gas so as to form very small bubbles; 5) said mist eliminator vanes are located downstream of the mixing vanes of the outlet conduit, so as to remove mist droplets from the exhaust gas.

The technical solution of the invented method of US 7,056,367 is a method of scrubbing the exhaust gas to reduce particulates and gaseous contaminants and to decrease the temperature in the exhaust gas, which comprises: a) passing the exhaust gas through an extended inlet conduit; b) passing the exhaust gas in a counter-flow direction through a heat conduit surrounding the inlet conduit; c) passing the exhaust gas through a liquid bath for scrubbing, cooling, and for precipitation of the particulate matter; d) passing the exhaust gas in a counter-flow direction into an outlet conduit surrounding the heat conduit and having share a length of the wall with the heat conduit; e) passing the exhaust gas through one or more mixing vanes so as to change the direction of the gas , whereby generating a turbulence in the liquid bath, and creating (numerous) fine bubbles to form a bubble stream; f) passing the exhaust gas through one or more mist eliminator vanes to substantially eliminate any entrained bubbles or moisture; g) passing the exhaust gas along a heated surface of the shared wall to heat the exhaust gas to a temperature above the dew point; and h) completely discharging the exhaust gas from the scrubber.

The major objects of above invented method and apparatus of the prior art are as follows:
1) scrubbing SO₂ with high efficiency, and at the same time to keep the operating pressure loss less than six inches of water column;
2) increasing the temperature of the discharged exhaust gas to at least 30° C above the dew point.

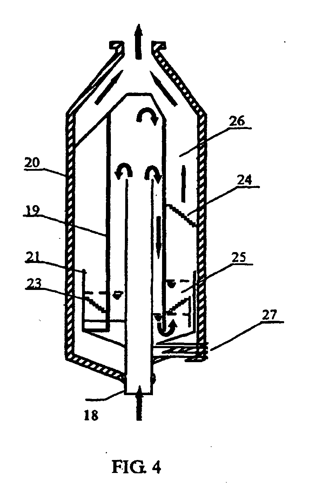

Using seawater scrubbing to reduce the sulfur dioxide and other pollutants in the exhaust gas mainly relies on some important conditions. One of the conditions is the temperature, and the higher the temperature, the worse the scrubbing effect. Another condition is the gas-liquid contact area, and the larger the contact area, the better the scrubbing effect. The basic technical solution in US patent No. 7,056,367 is "passing the exhaust gas through the scrubbing liquid in the tank", i.e., bubbling scrubbing in which the high temperature exhaust gas is scrubbed and cooled, and the gas-liquid contact surface is enlarged by "mixed vanes". The "passing exhaust gases through the scrubbing liquid in the tank" in the invention is the technical solution of bubbling scrubbing, which has the following shortcomings when used for scrubbing the high temperature exhaust gas of ship by seawater.
1) It is difficult to overcome the conflict between the scrubbing effect and the operational cost.
   The prominent feature of the invention is "passing exhaust gas through the scrubbing liquid in the tank", i.e., the bubbling scrubbing and cooling method. The bubbling scrubbing method is almost has the lowest efficiency in gas-liquid mass-transfer methods. In such technology, the smaller the size of the element which is usually called bubbling hood, i.e., the bubbling unit, and the larger the amount thereof, the higher the transfer efficiency (see FIG. 4). However, the mentioned invention, being limited by the conditions in the ship for exhaust gas scrubbing, employs a single bubbling hood of a large size, which has a very low mass-transfer efficiency. On the other hand, scrubbing or absorbing level of the bubbling scrubbing method directly relates to the depth of exhaust immersed in the liquid. The deeper in the liquid, the more the bubbles. Also the longer the path passed by the bubbles to leave the liquid, and the larger the gas-liquid contact area, the higher the scrubbing rate or absorptivity. The pressure loss of the bubbling scrubbing operation is the energy loss of the exhaust to overcome the liquid pressure, and in value substantially corresponds to the liquid column pressure based on the depth of the exhaust gas immersed in the liquid. That is, the better the scrubbing performs better, the more the increase of the pressure loss, and the higher the operational cost. The conflict between the scrubbing effect and the operational cost is generally irreconcilable.
   The technical solution of the patent requires a running pressure loss to be lower than 6 inches (152mm) of water column under the condition of using the seawater as the scrubbing liquid, and obviously, the depth of the exhaust gas in the scrubbing liquid is also less than 6 inches. With such a shallow immerse, the overall liquid-gas contact area is still extremely limited even if the 'mixed vanes' is added as additional technical means to form a turbulence and to disperse bubbles. As a result, the scrubbing and absorbing efficiency is still very low. In order to reach a much better scrubbing performance, the exhaust immersion depth and the pressure loss shall be increased, hence the energy consumption and the operational cost would rise accordingly. This obviously will not bring a good result.
2) It is difficult to overcome the conflict between cooling of the high temperature flue gas and absorbing sulfur dioxide at a low temperature.
   The major purpose of scrubbing the flue gas with the seawater is to absorb the sulfur dioxide. This solution of the invention employs the same tank of water to carry out the cooling, scrubbing and absorbing processes for the high temperature gas. The temperature of the scrubbing seawater increases while the high temperature gas is cooled, and simultaneously, the heated seawater is used for scrubbing and absorbing the sulfur dioxide. This causes the sulfur dioxide absorbing to be inefficient. In order to increase the absorbing efficiency, the only way is to add more scrubbing water to lower the increase of temperature of the scrubbing seawater. However, this will significantly increases the energy consumption and the operational cost, and cannot solve both at the same time.
3) It is difficult to overcome the conflict between decreasing of the running cost with anticorrosive elements and increasing of the manufacturing cost.
   Another feature of this invention is that it adopts a nested heat exchanger of the "heat conduit" type, i.e., "passing the exhaust gas along a heated surface of the shared wall to raise the temperature of the exhaust gas to be above the dew point". The technical solution is adopted which increases the temperature of the exhaust gas so as to prevent the corrosion of the apparatus, so as to decrease the operational cost and extend the operational life of the apparatus.. However, the heat conduit must have a cross-section of a star-shape or other complicated shape so as to increase the heat conduct area, and to re-heat the exhaust gas with more heat. Because the heat exchanger has to work in a condition of high-temperature, high-humidity, and a strongly corrosive environment and has a complicated structure, it needs a large quantity of corrosion resistant alloy materials, and this would certainly increase the manufacturing cost of the apparatus, and the total cost would rise accordingly, and this outweighs the benefits.
4) It is difficult to overcome the conflict between the corrosion prevention and the corrosion aggravation in the gas re-heating.

The invention adopts a nested heat exchanger of the "heat conduit" type under the condition of scrubbing the ship exhaust gas with seawater. The real temperature of the reheated exhaust will not only be not higher than the acid dew point by 30°C, but also be significantly lower than the dew point. The problem is that in the range of the temperature not higher than the dew point, the corrosion gets more serious when the exhaust temperature is higher. The purpose of this technical solution of this invention is to prevent the corrosion, but the re-heating method for increasing the exhaust temperature may only aggravate the corrosion. The result seems against the inventive purpose.

The invention has been experimented on ships for many years.

US 3,285,711 discloses a system for the preparation of inert flue gases comprising in combination, means for producing flue gases and means for treating the flue gases and removing oxides of sulphur therefrom and for inerting a cargo tank at ambient temperature, the flue gas treating means including a scrubber first stage having an inlet adapted to be connected to a source of flue gas, a conduit arranged to be connected to a supply of water, means connected to the conduit for introducing an aqueous solution of an alkaline inorganic compound into the scrubber first stage, means for intimately contacting the flue gases with the solution; a dehumidifier second stage connected and arranged to receive the scrubbed flue gases from the first stage for removing water vapour from the flue gases, said dehumidifier second stage including separate means connected to the conduit and having cooling means therein for placing cooled water from the conduit into direct contact with the scrubbed flue gases, and means for directing the spent dehumidifying cooled water from the dehumidifier second stage into the scrubber first stage, means separate from the dehumidifier second stage for raising the temperature of the dehumidified flue gases after they leave the dehumidifier second stage thereby lowering the relative humidity of the gas, and means for directing the flue gases from the discharge of the treating means to the cargo tank.

Prior Art 4: US 4,085,194 discloses a waste flue gas desulfurizing method in which a waste flue gas containing sulfurous acid gas is contacted directly with sea-water, whereby the sulfurous acid gas is absorbed in the sea-water and concurrently sulfites are formed in the sea-water by the reaction between the sulfurous acid ions and metal ions present in the sea-water, and then the carbonic acid component contained in the sea-water which is then in the acidic region is released therefrom by a decarbonation operation to restore the pH value of the sea-water in the neutral region, and thereafter oxygen contained in the air or from other source is introduced into the sulfite-containing sea-water to convert said sulfites into sulfates.

Clearly, to solve the problem in processing the exhaust gas of high temperature at 200-400°C from the marine ship engines, methods and apparatuses of low efficiency and high cost have been adopted in the prior art. On the basis of the current situation as described above, the technical principle of using seawater scrubbing to eliminate ship pollution , as expected by people for a long time, has not become a practical technical solution.

### Summary of the invention

The first object of the present invention is to overcome the shortcomings in the existing ship flue gas scrubbing apparatus, and to provide a highly efficient ship flue gas scrubbing apparatus adapted for ships with a high gas temperature gas and a limited space.

The second object of the present invention is to overcome the shortcomings in the existing ship flue gas scrubbing methods, and to provide a ship flue gas scrubbing method in which the high temperature exhaust gas is cooled first and then scrubbing by fillings is performed, whereby the cooling and scrubbing are separated into two steps to respectively achieve the best results.

The common object of the ship flue gas scrubbing apparatus and method in the present invention is to realize the good technical and economic goals, which include a high pollutant reduction efficiency, a low running cost, a long lifespan, and a guarantee that the total cost is significantly lower than the total cost saved by substituting low-sulfur fuels. The technical solution of the ship flue gas scrubbing apparatus of the present invention is as follow. A ship flue gas scrubbing apparatus, comprising a housing (1), a scrubbing layer (7) having fillings being fixed within the housing at an upper part of the housing, a liquid collecting pool (15) with a seawater discharging outlet (16) being provided within the housing at a lower part of the housing, a flue gas leading pipe (3) for leading flue gas to be scrubbed from outside of the housing (1) into inside of the housing, is connected to a wall of the housing (1), one end of the flue gas leading pipe (3) being a flue gas inlet (3.1) outside the housing, another end of the flue gas leading pipe (3) being a flue gas leading-in port (3.2) inside the housing, the flue gas leading-in port (3.2) being located at an inner wall of the housing (1) or extends into the housing (1), and being located between the scrubbing layer (7) and the liquid collecting pool (15), a cooler (4) for cooling high temperature flue gas (2) being provided in a flue gas passage between the flue gas inlet (3.1) outside the housing of the flue gas leading pipe (3) and the scrubbing layer (7), a scrubbing seawater inlet (12) being above the scrubbing layer (7), and a clean gas outlet (10) being provided at a top of the housing (1); wherein,
the cooler (4) is a cooling flow equalization layer provided between the gas leading-in port (3.2) inside the housing and the scrubbing layer (7), and the cooling flow equalization layer is composed of high temperature resistant components and being fixed, or installed by means of fasteners, on an inner wall of the housing (1);
the cooling flow equalization layer includes high temperature resistant fillings and a filling supporting frame, and the supporting frame for the high temperature resistant fillings is fixed on an inner wall of the housing (1) directly or through fasteners, and
the ship flue gas scrubbing apparatus is arranged so that seawater flows downwards through the scrubbing layer (7) and subsequently through the cooler (4), countercurrent to and in direct contact with the flue gas, to reduce the temperature of the flue gas, then the cooled flue gas goes upwards to enter the scrubbing layer, thus separating the cooling and the scrubbing and absorbing into two functional sections; and wherein the material of the high temperature resistant components forming the cooling flow equalization layer is a high temperature resistant inorganic material and the fillings in the scrubbing layer (7) are made of a polymer material.

It comprises a housing, a scrubbing layer having fillings is fixed within the housing at an upper part of the housing. A liquid collecting pool with a seawater discharging outlet is provided within the housing at a lower part of the housing. A flue gas leading pipe, which guides flue gas to be scrubbed from the outside of the housing into the inside of the housing, is connected to a wall of the housing. One end of the flue gas leading pipe is a flue gas inlet located outside the housing. The other end of the flue gas leading pipe is a flue gas leading-in port located inside the housing. The flue gas leading-in port is located at an inner wall of the housing or extends into the housing, and is located between the scrubbing layer and the liquid collecting pool. A cooler for cooling high temperature flue gas is provided in a flue gas passage between the flue gas inlet outside the housing of the flue gas leading pipe and the scrubbing layer. A scrubbing seawater inlet is above the scrubbing layer. A clean gas outlet is provided at the top of the housing.

Based on the technical resolution of the ship FGD device as described above, technical resolutions with additional features are as follows.

In the ship flue gas scrubbing apparatus, the cooler is a cooling flow equalization layer provided between the gas leading-in port inside the housing and the scrubbing layer. The cooling flow equalization layer is composed of high temperature resistant components and is fixed, or installed by means of fasteners, on the inner wall of the housing.

In the ship flue gas scrubbing apparatus, the cooler is a tube cooler or a sheet cooler installed on the flue gas leading pipe or in a cavity inside the pipe. Alternatively, the cooler is a spray system connected to the flue gas leading pipe or on the housing, for spraying cooling water to the high temperature flue gas.

In the ship flue gas scrubbing apparatus, the gas leading-in port inside the housing is an exit of the flue gas leading pipe fixed at the bottom of the housing and extending to the inside of the housing. Facing the exit is a liquid collecting cover for preventing the scrubbing seawater from entering the flue gas leading pipe.

In the ship flue gas scrubbing apparatus, the gas leading-in port inside the housing is a through hole in the side wall of the housing, or an exit of the flue gas leading pipe fixedly connected to the side wall of the housing.

In the ship flue gas scrubbing apparatus, the liquid collecting pool is fixedly composed of a lower side wall of the housing, a bottom of the housing, and a pipe wall of the flue gas leading pipe or a separation plate outside the pipe wall.

In the ship flue gas scrubbing apparatus, the liquid collecting pool is composed of the side wall and the bottom of the housing under a horizontal cross section where a lower edge of the flue gas leading-in port inside the housing lies.

In the ship flue gas scrubbing apparatus, the material of the high temperature resistance components forming the cooling flow equalization layer is a high temperature resistant inorganic material selected from metal, ceramics or carbon fiber materials.

In the ship flue gas scrubbing apparatus, the cooling flow equalization layer includes high temperature resistant fillings and a filling supporting frame. The supporting frame for the high temperature resistant fillings is fixed on the inner wall of the housing directly or through fasteners.

In the ship flue gas scrubbing apparatus, the cooling flow equalization layer includes a high temperature resistant grid or/and a high temperature resistant perforated plate, which is fixed on the wall of the housing directly or through fasteners.

In the ship flue gas scrubbing apparatus, the scrubbing layer includes fillings and a filling supporting frame. The filling supporting frame is fixed on the inner wall of the housing directly or through fasteners.

In the ship flue gas scrubbing apparatus, the fillings in the scrubbing layer is of a polymer material selected from polypropylene, polyethylene, or ABS engineering plastics.

In the ship flue gas scrubbing apparatus, a water distributor which outflows downwards the scrubbing seawater in a horizontal and even distribution pattern is fixed above the scrubber layer. The water distributor is composed of aligned water pipes or/and water channels.

In the ship flue gas scrubbing apparatus, a mist eliminator 9 for eliminating mist drops in the exhaust gas is installed above the water distributor.

The technical solution of the ship flue gas scrubbing method of the present invention for scrubbing, by means of seawater, the pollutants, mainly sulfur dioxide in the flue gas discharged from ships is as following.

The steps of the ship flue gas scrubbing method are as follows:

a. leading in flue gas: flue gas discharged by an engine is led into a scrubber, and the leaded-in flue gas is caused to flow upwards in the scrubber;

b. injecting scrubbing seawater: the scrubbing seawater is injected into the scrubber from a scrubbing seawater entrance located above a scrubbing layer of the scrubber, and the scrubbing seawater is caused to flow downwards in the scrubber;

c. scrubbing: scrubbing in a counter-flow way is realized by flowing the scrubbing seawater, which is injected from above the scrubber, through a scrubbing layer with fillings to contact low temperature flue gas that goes upwards; .

d. cooling: high temperature flue gas is cooled by a cooler. The scrubbing seawater flows downward through the cooler to reduce the temperature of the high temperature flue gas, then the cooled flue gas goes upwards to enter the scrubbing layer;

e. discharging clean flue gas: after being scrubbed, clean gas goes upwards and is discharged via a cleaned flue gas outlet;

f. discharging the scrubbing seawater: after being scrubbed, the seawater falls into a liquid collecting pool and is discharged from a seawater discharging outlet.

Based on the above technical solution of the ship flue gas scrubbing method, the technical solutions with additional technical features are as follows.

In the ship flue gas scrubbing method, in the scrubbing step, the method of sufficiently scrubbing the low temperature flue gas going upwards is that, in the scrubbing layer, the flue gas and the scrubbing seawater is caused to contact and mix sufficiently at a gas-liquid contact surface of the fillings, and the flue gas going upwards is caused to be sufficiently scrubbed to remove the SO₂ therefrom.

In the ship flue gas scrubbing method, in the step of discharging clean flue gas, discharging the clean flue gas is that the clean flue gas is caused to pass through a mist eliminator to eliminate mist drops in the flue gas and then is discharged from the cleaned flue gas outlet.

In the ship flue gas scrubbing method, an operational pressure loss of the flue gas is less than 110 millimeters of water column.

The technical principle and effects of the ship flue gas scrubbing method and apparatus of the present invention are as follows.

Natural seawater possesses strong abilities to dissolve and absorb sulfur dioxide, and can be used to scrub and clean flue gases, so as to eliminate sulfur dioxide and other pollutants in flue gases discharged from industrial combustion facilities. Practical apparatus for scrubbing flue gases with seawater is required to have a small size and a high efficiency. This is because that the ships have a limited space, the reaction time in the processing is short, the processing apparatus must have not only a high total absorptivity but also a high absorbing speed. In other words, the scrubbing and absorbing efficiency must be very high, otherwise the apparatus is not practical. In order for a ship flue gas scrubbing method and apparatus using the seawater to have high scrubbing and absorbing efficiency, the key processing factors are reaction temperature and contact area. That is, the higher the reaction temperature, the worse the scrubbing and absorbing effect, and larger the liquid-gas contact area, the better the scrubbing and absorbing effect. Therefore, , the present invention employs the method of first cooling the high temperature flue gas, followed by scrubbing and absorbing, separating the cooling and the scrubbing and absorbing into two functional sections, respectively realizing the highest efficiency, and achieving the best overall effect. The total cost of the ship flue gas scrubbing apparatus and method of the present invention is significantly lower than the total cost saved by substituting the low-sulfur fuel, thereby changing the situation of lacking a practical technology for the ship emission reduction, and realizing the expectation of reducing ship pollution by means of seawater scrubbing, which has been pursued by people for a long time but has not been realized.

The details are as follows.
**Cooling:** The ship flue gas scrubbing method and apparatus in the present invention can be applied in situations where the flue gas discharged from a ship diesel engine has a temperature as high as 490°C. The sulfur dioxide cannot be scrubbed and absorbed if the flue gas at a high temperature has not been cooled. In addition, the components, especially the fillings in the scrubbing functional section will be easily damaged if the high temperature flue gas enters the scrubbing functional section directly. Therefore, a scrubbing functional section is provided at the upside of the scrubber, and a cooling flow equalization section is provided at the downside of the scrubber. The high temperature gas goes upward to pass the cooling flow equalization section and the scrubbing functional section to contact the scrubbing liquid for being scrubbed. The cooling flow equalization section at the downside of the scrubber is a functional section composed of a high temperature resistant grid or/and fillings. The high temperature flue gas led in from the gas inlet pipe passes through the grid or/and the fillings in the cooling flow equalization section to be cooled and equalized.. The cooling flow equalization section at the downside of the scrubber is a functional section composed of a high temperature resistant perforated plate or/and fillings. The high temperature flue gas led in from the gas inlet pipe passes through the perforated plate or/and the fillings in the cooling flow equalization section to be cooled and equalized. In an implementing solution in which the gas inlet pipe passes through the liquid collecting pool, the portion of the gas inlet pipe immersed in the scrubbing liquid is also a part of the cooling functional section, thus resulting in the best cooling effect.
**Scrubbing:** The scrubbing functional section is composed of a filling layer. The water distributor distributes downwards the scrubbing seawater evenly from a horizontal plane to wash the fillings. The cooled flue gas flows upwards through the filling layer. Because the scrubbing seawater is distributed at a huge surface formed by the fillings, a huge liquid-gas contact area is provided, whereby the scrubbing and absorbing efficiency is very high. On the other hand, the scrubbing process in the present invention adopts a counter-flow arrangement, in which the scrubbing seawater goes downward through the scrubbing layer while the flue gas goes upward through the scrubbing layer. The flue gas contacts lastly fresh seawater with the strongest alkalinity and the lowest temperature. Thus, the efficiency to scrub and absorb sulfur dioxide can be very high. At the same time, the scrubbing layer with fillings employed in the present inventions invention significantly reduces resistance to the passing gas, thereby ensuring the realization of the object of the present invention to provide a technical apparatus with a high absorbing efficiency and a low operational cost.

As a result of the above-described technical solution, the serious shortcomings in the prior art has been overcome. The ship flue gas scrubbing apparatus and method of the present invention have prominent technical effects as described below.
1) High scrubbing efficiency and low operational cost
   The present invention adopts the method of counter-flow scrubbing with fillings, and its liquid-gas contact area is at least thousands times of the bubbling scrubbing method. This realizes a high efficient scrubbing which can reduce 99% sulfur oxides, 20% nitrogen oxides, and 80% particles, with a low pressure loss that is less than 110 millimeters of water column.
   The high efficient scrubbing of the present invention has significance to international shipping business for the environmental objectives. IMO published in 2005 restrictions for SECA (SOx Emission Control Area) that the sulfur content of fuel oils used in ships must not exceed 1.5%, or the ships must be equipped with an exhaust gas desulphurization apparatus to ensure that the discharged flue gas has a sulfur emission equal to that in the ships using fuel oils with the sulfur content not exceeding 1.5%, i.e., the 'desulphurization equivalent fuel oil sulfur content' must not exceed 1.5%. Other international organizations have been aiming for a goal of 0.1% fuel oil sulfur content. Currently, the average sulfur content of heavy oils in the world is approximately 3%, so the scrubbing efficiency shall be 50% to achieve the goal of 1.5% desulphurization equivalent fuel oil sulfur content, and the scrubbing efficiency shall be 96.7% to achieve the goal of 0.1% desulphurization equivalent fuel oil sulfur content.
2. Cooling the high temperature gas and absorbing the SO₂ at a low temperature are carried out in different sections.
   The high temperature flue gas must be cooled so that the SO₂ in it can be absorbed. The solution of the present invention includes a cooler. A further solution is that the cooling flow equalization layer is disposed below the scrubbing layer, whereby the fresh scrubbing seawater passes through the scrubbing layer to absorb SO₂ in the cooled flue gas, and then passes the cooling flow equalization layer to cool the high temperature gas. The cooling flow equalization and absorbing are carried out in two different functional sections in separate steps, and do not have impact on each other. This realizes the best cooling effect and the highest SO₂ absorbing efficiency. In addition, as described above, in the counter-flow scrubbing method in the present invention, the seawater at the flue gas outlet has the lowest temperature, and consequently the best absorbing ability. This results in an extremely high SO₂ absorptivity, further demonstrating the significant and good technical effects brought by the technical resolution of the present invention in which the cooling and absorbing are carried out in separate steps.
3. The low operational cost and the low manufacturing cost are reconciled.
   The low efficient heat exchanger results in the loss outweighing the gain, which should be avoided. High efficiency heat exchanger requires tremendous thermal capacity and a huge heat conduction area, and thus it may not be installed on ships because of its enormous size. Therefore, the invention adopts the non-reheating gas exhaust, as well as the above-mentioned high efficient filling scrubbing technology. Therefore, the operational cost and the manufacturing cost for the processing apparatus are both reduced considerably.
4. The conflict between re-heating anticorrosion and corrosion aggravation is eliminated.
   The present invention adopts the non-reheating gas exhaust and completely omits the re-heating heat exchanger, which effectively overcomes the shortcomings in the existing re-heating heat exchanger for being costly and resulting in a reversed effect. As mentioned above, the flue gas at the counter-flow scrubbing outlet has the lowest temperature, and consequently the corrosion ability of the flue gas is the minimum. Therefore, corrosion resistant materials with less cost can be chosen to extend the lifespan of the apparatus.

To summarize, the technical solution of the present invention not only realizes high efficiency, high performance, and high reliability, but also significantly reduces manufacturing cost and operational cost, and therefore, it has excellent technical and economic performance and good technical effects.

### Brief Description of the Drawings

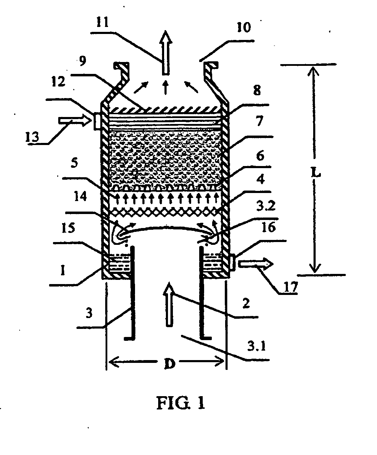

FIG. 1 is a schematic diagram showing a ship flue gas scrubbing apparatus according to an embodiment of the invention. The flue gas leading-in port 3.2 inside the housing is the exit of a flue gas inlet pipe 3 which is fixed at the bottom of the housing 1 and extends to the inside of the housing 1, and is suitable for the situation that the flue gas goes upward vertically to enter the scrubber. The cooler 4 is a cooling flow equalization layer 4' located between the flue gas leading-in port 3.2 inside the housing and the scrubbing layer 7.

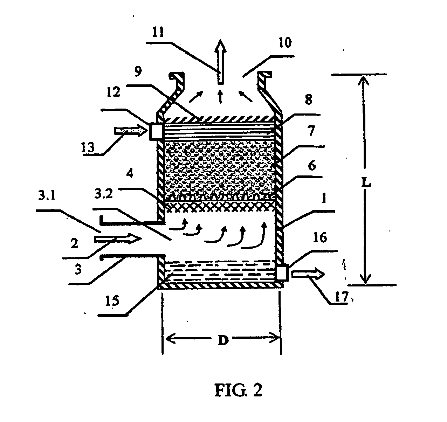

FIG. 2 is a schematic diagram showing a ship flue gas scrubbing apparatus according to another embodiment of the invention. The flue gas leading-in port 3.2 is located at the inner wall of the housing 1, and is the exit of a flue gas leading pipe 3 which is fixedly connected to the side wall of the housing 1. It is suitable for the situation that flue gas enters the scrubber horizontally. The cooler 4 is a cooling flow equalization layer 4' located between the flue gas leading-in port 3.2 inside the housing and the scrubbing layer 7.

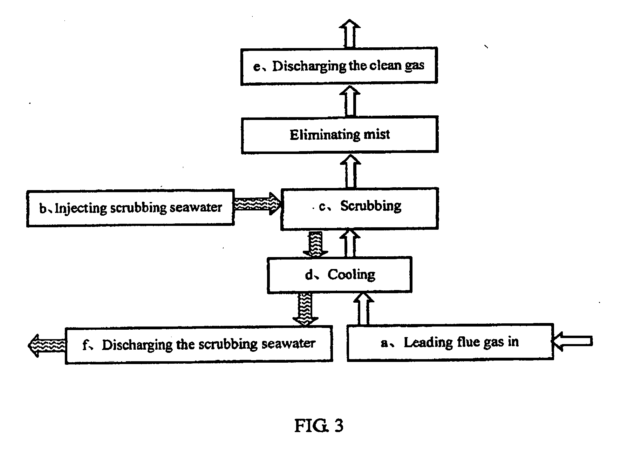

FIG. 3 shows a block diagram of the ship flue gas scrubbing method according to the present invention.
FIG. 4 is a schematic diagram of a prior art technical resolution of the US patent No. 7,056,367, which includes an co-axial nested inlet conduit, a hot conduit, an outlet conduit, a counter-flow passing gas exhaust, and a tank containing scrubbing liquid, wherein ends of the heat and outlet conduits are operatively interconnected and immersed in the scrubbing liquid in the tank, and the heat conduit has a star-shaped cross section to increase the heat conduction area, so as to p re-heat the exhaust gases with more heat to increase the temperature of the exhaust gas beyond the dew point by at least 30° C..

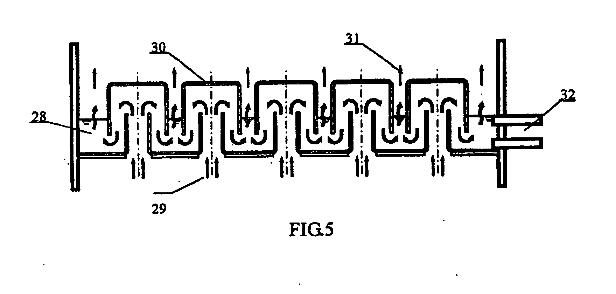

FIG. 5 is a schematic diagram of a conventional bubbling scrubber, and five bubbling units are shown in the apparatus as illustrated.

Names of components or structures corresponding to the reference numbers in the drawings are as follows.

In FIG. 1 and FIG.2: 1 - housing, 2 - high temperature flue gas, 3 - flue gas leading pipe, 3.1 - flue gas inlet outside the housing, 3.2 - flue gas leading-in port inside the housing, 4 - cooler, 4' - cooling flow equalization layer, 5 - low temperature flue gas, 6 - filling supporting frame, 7 - scrubbing layer, 8 - water distributor, 9 - mist eliminator, 10 - exhaust gas outlet, 11 - discharging clean flue gas, 12 - scrubbing seawater inlet pipe, 13 - scrubbing seawater, 14 - liquid collecting cover, 15 liquid collecting pool, 16 - seawater discharging pipe, 17 - discharged seawater; D - the diameter of the scrubber, which is a side length when the scrubber is rectangular; L - the height of the scrubber.

In FIG. 3, a - leading flue gas in, b - injecting scrubbing seawater, c - scrubbing, d - cooling, e - discharging the clean gas, and f - discharging the scrubbing seawater.

In FIG. 4 (the technical resolution of the US patent 7,056,367), 18 - gas inlet conduit and gas inlet; 19 - hot conduit; 20 - exhaust gas leading pipe; 21 - tank containing scrubbing liquid; 22 - scrubbing liquid; 23 - mixing vanes, 24 - mist eliminator vanes, 25 - mixing exhaust and scrubbing liquid in the tank, 26 - scrubbing gas re-heat area, and 27 - scrubbing liquid inlet and outlet.

In FIG. 5(conventional bubbling scrubber), 28 - scrubbing liquid, 29 - entering gas, 30 - bubbling hood unit, 31 - discharging gas, and 32 - inlet and outlet of scrubbing liquid.

### Detailed Description of the Embodiments

Further description of the ship flue gas scrubbing apparatus and method are given below with reference to the drawings and embodiments.

A. Embodiments for the ship flue gas scrubbing Apparatus.

### Embodiment 1:

As illustrated in FIG. 1, the flue gas leading-in port 3.2 inside the housing is the exit of the flue gas inlet pipe 3 which is fixed at the bottom of the housing 1 and extends to the inside of the housing 1. In the embodiment, the flue gas leading pipe 3 is always kept above acidic seawater surface in the liquid collecting pool 15, that is to say, the flue gas does not enter the acid seawater. It is suitable for the situation where the flue gas is leaded in vertically. It includes a housing 1. a scrubbing layer 7 with fillings is fixed at the upper side inside the housing. A liquid collecting pool 15 with a seawater outlet 16 is provided at the lower side inside the housing. A flue gas leading pipe 3, which leads the exhaust gas to be scrubbed from the outside into the housing 1, is connected to the housing wall of the housing 1. One end of the flue gas leading pipe 3 is a flue gas inlet 3.1 outside the housing, the other end is the flue gas leading-in port 3.2 inside the housing. The gas leading-in port 3.2 inside the housing extends into the housing 1, and it is located between the scrubbing layer 7 and the liquid collecting pool 15. A cooler 4 used for cooling the high temperature flue gas 2 is provided in the flue gas passage between the flue gas inlet 3.1 outside the housing of the flue gas leading pipe 3 and the scrubbing layer 7. A scrubbing seawater inlet 12 is provided above the scrubbing layer 7. A purified flue gas outlet 10 is provided at the top of the housing 1.

The cooler 4 is a cooling flow equalization layer 4' and is located between the flue gas leading-in port 3.2 inside the housing and the scrubbing layer 7. The cooling flow equalization layer 4' is made up of high temperature resistance components and is fixed on the inner wall of housing 1. Alternatively it can be fixed on the inner wall of housing 1 by means of fasteners.

The cooler 4 is a tube cooler or sheet cooler installed on the flue gas leading pipe 3. In another embodiment, the cooler 4 is a tube cooler or sheet cooler installed in an internal cavity of the flue gas leading pipe 3. In still another embodiment, the cooler 4 is a water spray system connected to the flue gas leading pipe 3 or the housing 1 for spraying cooling water to the high temperature flue gas 2. The water spray system can be a set of spray heads.

The gas leading-in port 3.2 inside the housing 1 is fixed at the bottom of the housing 1 and extends to the exit of the flue gas leading pipe 3 inside the housing 1. a Facing the exit is a liquid collecting cover 14 for preventing the scrubbing seawater from entering the flue gas leading pipe 3.

The gas leading-in port 3.2 inside the housing 1 is a through hole in the side wall of the housing 1, or an exit of the flue gas leading pipe 3 fixedly connected to the side wall of the housing 1.

The liquid collecting pool 15 is composed of the lower side wall of the housing 1, the bottom of the housing 1 and the pipe wall of the flue gas leading pipe 3, or a a separation plate outside the flue gas leading pipe 3. The separation plate is able to prevent the pipe wall of the flue gas leading pipe 3 from corrosion.

The high temperature resistant components that make up the cooling flow equalization layer 4' are high temperature resistant inorganic materials. In this embodiment, ceramic material is used, and metal or carbon fiber materials may also be used. The high temperature resistance components of the cooling flow equalization layer 4' are composed of high temperature resistant fillings and a filling supporting frame. The filling supporting frame is directly fixed, or be fixed through fasteners, on the inner wall of the housing 1.

In other embodiments, the cooling flow equalization layer 4' may be a high temperature resistant grid or a high temperature resistant perforated plate, or the combination of both, which can be directly fixed, or be fixed through fasteners, on the inner wall of the housing 1.

The scrubbing layer 7 is composed of fillings and a filling supporting frame. The filling supporting frame is directly fixed, or be fixed through fasteners, on the inner wall of the housing 1. The fillings in the scrubbing layer 7 are of a polymer material select from polypropylene, polyethylene, or ABS. The cost of using non-high temperature resistant materials may be much lower than using high temperature resistant materials, so that the cost of the apparatus is reduced significantly.

Above the scrubbing layer 7 there is a water distributor 8 which can outflow downwards the scrubbing seawater in a horizontal and even distribution pattern. The water distributor 8 is composed of aligned water pipes or aligned water channels. , or a combination of both. A mist eliminator 9 for eliminating mist drops in the exhaust gas is installed above the water distributor 8.

The scrubbing liquid finally discharged out of the scrubber would be discharged to the ocean if it meets the environmental emission requirements of the sea area that the ship passes or/and stays, and would be temporarily kept in the waste water cabin or be discharged after further treatment if it does not meet the relevant requirements.

The ship implemented with this embodiment is equipped with a diesel fuel engine of 7150 KW power, 9700 hp, 127 rpm, using fuel oil with sulfur content 3%. The key parameters are as follows:

| | |
|---|---|
| diameter of the scrubber housing (Dmm) | 2523 |
| height of the scrubber housing L(mm) | 8750 |
| Inlet flue gas volume (Kg/h) | 48281 |
| Inlet flue gas temperature °C | 200∼490 |
| Inlet SO₂ volume (Kg/h) | 70 |
| Inlet flue gas and dust volume (g/h) | 245 |
| Inlet NOx volume (g/KWh) | 18.56 |
| Scrubbing seawater volume (Ton/h) | 96 |
| Outlet discharged SO₂ volume (Kg/h) | 0.68 |
| Outlet discharged flue gas and dust volume (g/h) | 20∼49 |
| Outlet flue gas temperature°C | 20 |
| Outlet discharged NOx volume (g/KW·h) | 14.8 |
| International restrictions of discharged NOx volume (g/KW·h) | ≤17.0 |

**Embodiment 2**: FIG. 2 illustrates a ship flue gas scrubbing apparatus of another embodiment. It is different from Embodiment 1 in that the flue gas leading-in port 3.2 inside the housing I is at the inner wall of the housing 1, and it is an exit of the flue gas leading pipe 3 that is fixedly connected on the side wall of the housing 1, which is able to always keeps the flue gas leading pipe 3 above acidic seawater surface in the liquid collecting pool 15. That is to say, the flue gas does not enter the acid seawater. It is suitable for the situation where the flue gas is led in horizontally. The liquid collecting pool 15 is composed of the side wall and the bottom of the housing 1 under the horizontal cross-section where the lower edge of the gas leading-in port 3.2 inside the housing lies.

### B. ship flue gas scrubbing method according to embodiments of the present invention

**Embodiment 5**: As illustrated in FIG. 3 which is a flowchart block diagram, it is a ship flue gas scrubbing method using seawater to scrub pollutants, primarily SO₂, in the ship flue gas exhaust.. The method includes the following steps.
a. leading in flue gas: flue gas discharged by an engine is led into a scrubber, and the leaded-in flue gas is caused to flow upwards in the scrubber;
b. injecting scrubbing seawater: the scrubbing seawater is injected into the scrubber from a scrubbing seawater entrance located above a scrubbing layer of the scrubber, and the scrubbing seawater is caused to flow downwards in the scrubber;
c. scrubbing: scrubbing in a counter-flow way is realized by flowing the scrubbing seawater, which is injected from above the scrubber, through a scrubbing layer with fillings to contact low temperature flue gas that goes upwards;.
d. cooling: high temperature flue gas is cooled by a cooler. The scrubbing seawater flows downward through the cooler to reduce the temperature of the high temperature flue gas, then the cooled flue gas goes upwards to enter the scrubbing layer;
e. discharging clean flue gas: after being scrubbed, clean gas goes upwards and is discharged via a cleaned flue gas outlet;
f. discharging the scrubbing seawater: after being scrubbed, the seawater falls into a liquid collecting pool and is discharged from a seawater discharging outlet.

In the ship flue gas scrubbing method, in the scrubbing step, the method of sufficiently scrubbing the low temperature flue gas going upwards is that, in the scrubbing layer, the flue gas and the scrubbing seawater is caused to contact and mix sufficiently at a gas-liquid contact surface of the fillings, and the flue gas going upwards is caused to be sufficiently scrubbed to remove the SO₂ therefrom. In the step of discharging clean flue gas, discharging the clean flue gas is that the clean flue gas is caused to pass through a mist eliminator to eliminate mist drops in the flue gas and then is discharged from the cleaned flue gas outlet. An operational pressure loss of the flue gas is less than 110 millimeters of water column.

The protection range of this invention is not limited by the embodiments described above.

## Claims

1. A ship flue gas scrubbing apparatus, comprising a housing (1), a scrubbing layer (7) having fillings being fixed within the housing at an upper part of the housing, a liquid collecting pool (15) with a seawater discharging outlet (16) being provided within the housing at a lower part of the housing, a flue gas leading pipe (3) for leading flue gas to be scrubbed from outside of the housing (1) into inside of the housing, is connected to a wall of the housing (1), one end of the flue gas leading pipe (3) being a flue gas inlet (3.1) outside the housing, another end of the flue gas leading pipe (3) being a flue gas leading-in port (3.2) inside the housing, the flue gas leading-in port (3.2) being located at an inner wall of the housing (1) or extends into the housing (1), and being located between the scrubbing layer (7) and the liquid collecting pool (15), a cooler (4) for cooling high temperature flue gas (2) being provided in a flue gas passage between the flue gas inlet (3.1) outside the housing of the flue gas leading pipe (3) and the scrubbing layer (7), a scrubbing seawater inlet (12) being above the scrubbing layer (7), and a clean gas outlet (10) being provided at a top of the housing (1); wherein,
the cooler (4) is a cooling flow equalization layer (4') provided between the gas leading-in port (3.2) inside the housing and the scrubbing layer (7), and the cooling flow equalization layer is composed of high temperature resistant components and being fixed, or installed by means of fasteners, on an inner wall of the housing (1);
the cooling flow equalization layer includes high temperature resistant fillings and a filling supporting frame, and the supporting frame for the high temperature resistant fillings is fixed on an inner wall of the housing (1) directly or through fasteners, and
the ship flue gas scrubbing apparatus is arranged so that seawater flows downwards through the scrubbing layer (7) and subsequently through the cooler (4), countercurrent to and in direct contact with the flue gas, to reduce the temperature of the flue gas, then the cooled flue gas goes upwards to enter the scrubbing layer, thus separating the cooling and the scrubbing and absorbing into two functional sections; and wherein the material of the high temperature resistant components forming the cooling flow equalization layer is a high temperature resistant inorganic material and the fillings in the scrubbing layer (7) are made of a polymer material.

2. A ship flue gas scrubbing apparatus according to claim 1, **characterized in that** the gas leading-in port (3.2) inside the housing is an exit of the flue gas leading pipe (3) fixed at a bottom of the housing (1) and extending into the housing (1), and facing the exit is a liquid collecting cover (14) for preventing scrubbing seawater from entering the flue gas leading pipe (3).

3. A ship flue gas scrubbing apparatus according to claim 1, **characterized in that** the gas leading-in port (3.2) inside the housing is a through hole in a side wall of the housing (1), or an exit of the flue gas leading pipe (3) fixedly connected to the side wall of the housing (1).

4. A ship flue gas scrubbing apparatus according to claim 2, **characterized in that** the liquid collecting pool (15) is fixedly composed of a lower side wall of the housing (1), a bottom of the housing (1), and a pipe wall of the flue gas leading pipe (3) or a separation plate outside the pipe wall.

5. A ship flue gas scrubbing apparatus according to claim 3, **characterized in that** the liquid collecting pool (15) is composed of the side wall and a bottom of the housing (1) under a horizontal cross section where a lower edge of the flue gas leading-in port (3.2) inside the housing lies.

6. A ship flue gas scrubbing apparatus according to claim 1, **characterized in that** the scrubbing layer (7) includes fillings and a filling supporting frame, and the filling supporting frame is fixed on an inner wall of the housing (1) directly or through fasteners.

7. A ship flue gas scrubbing apparatus according to claim 1, **characterized in that** a water distributor (8) which outflows downwards scrubbing seawater in a horizontal and even distribution pattern is fixed above the scrubber layer (7), and the water distributor (8) is composed of aligned water pipes or/and water channels.

8. A ship flue gas scrubbing apparatus according to claim 7, **characterized in that** a mist eliminator (9) for eliminating mist drops in exhaust gas is installed above the water distributor (8).

9. A ship flue gas scrubbing method of using the ship flue gas scrubbing apparatus of claim 1, **characterized in that** it comprises the steps as follows:
a. leading in flue gas, in which flue gas discharged by an engine is led into a scrubber, and the leaded-in flue gas is caused to flow upwards in the scrubber;
b. injecting scrubbing seawater, in which the scrubbing seawater is injected into the scrubber from a scrubbing seawater entrance located above a scrubbing layer of the scrubber, and the scrubbing seawater is caused to flow downwards in the scrubber;
c. scrubbing, in which scrubbing in a counter-flow way is realized by flowing the scrubbing seawater, which is injected from above the scrubber, through a scrubbing layer with fillings to contact low temperature flue gas that goes upwards;
d. cooling, in which high temperature flue gas is cooled by a cooler, and the scrubbing seawater flows downward through the cooler to reduce the temperature of the high temperature flue gas, then a cooled flue gas goes upwards to enter a scrubbing layer;
e. discharging clean flue gas, in which, after being scrubbed, clean gas goes upwards and is discharged via a cleaned flue gas outlet;
f. discharging the scrubbing seawater, in which the seawater, after being scrubbed, falls into a liquid collecting pool and is discharged from a seawater discharging outlet.

10. A ship flue gas scrubbing method according to claim 9, **characterized in that**, in the step of discharging clean flue gas (11), discharging the clean flue gas (11) is that the clean flue gas (11) is caused to pass through a mist eliminator (9) to eliminate mist drops in the flue gas and then is discharged from the cleaned flue gas outlet (10).

11. A ship flue gas scrubbing method according to claim 9, **characterized in that** an operational pressure loss of the flue gas is less than 110 millimeters of water column.

## Patentansprüche

1. Schiffrauchgas-Reinigungsvorrichtung, umfassend ein Gehäuse (1), eine Reinigungsschicht (7) mit Füllkörpern, die innerhalb des Gehäuses an einem oberen Teil des Gehäuses befestigt sind, ein Flüssigkeitssammelbecken (15) mit einem Meerwasserausleitauslass (16), der sich innerhalb des Gehäuses an einem unteren Teil des Gehäuses befindet, ein Rauchgasleitungsrohr (3) zum Leiten von zu reinigendem Rauchgas von außerhalb des Gehäuses (1) nach innerhalb des Gehäuses, das mit einer Wand des Gehäuses (1) verbunden ist, wobei ein Ende des Rauchgasleitungsrohrs (3) ein Rauchgaseinlass (3.1) außerhalb des Gehäuses ist, ein anderes Ende des Rauchgasleitungsrohrs (3) ein Rauchgaseinleitungsanschluss (3.2) innerhalb des Gehäuses ist, wobei sich der Rauchgaseinleitungsanschluss (3.2) an einer Innenwand des Gehäuses (1) befindet oder sich in das Gehäuse (1) hinein erstreckt und sich zwischen der Reinigungsschicht (7) und dem Flüssigkeitssammelbecken (15) befindet, einen Kühler (4) zum Kühlen von Rauchgas hoher Temperatur (2), der sich in einem Rauchgasdurchtritt zwischen dem Rauchgaseinlass (3.1) außerhalb des Gehäuses des Rauchgasleitungsrohrs (3) und der Reinigungsschicht (7) befindet, wobei sich ein Waschmeerwassereinlass (12) oberhalb der Reinigungsschicht (7) befindet und sich ein Auslass für sauberes Gas (10) an der Oberseite des Gehäuses (1) befindet; wobei
der Kühler (4) eine kühlende Strömungsvergleichmäßigungsschicht ist, die sich zwischen dem Gaseinleitungsanschluss (3.2) innerhalb des Gehäuses und der Reinigungsschicht (7) befindet, und die kühlende Strömungsvergleichmäßigungsschicht aus hochtemperaturbeständigen Komponenten besteht und mittels Befestigungsteilen an einer Innenwand des Gehäuses (1) befestigt oder installiert ist;
die kühlende Strömungsvergleichmäßigungsschicht hochtemperaturbeständige Füllkörper und einen Füllkörpertragerahmen umfasst und der Tragerahmen für die hochtemperaturbeständigen Füllkörper direkt oder durch Befestigungsteile an einer Innenwand des Gehäuses (1) befestigt ist; und
die Schiffrauchgas-Reinigungsvorrichtung so angeordnet ist, dass Meerwasser durch die Reinigungsschicht (7) und anschließend durch den Kühler (4) im Gegenstrom zu und in direktem Kontakt mit dem Rauchgas nach unten fließt, um die Temperatur des Rauchgases zu reduzieren, dann das gekühlte Rauchgas nach oben strömt und in die Reinigungsschicht eintritt, so dass das Kühlen und das Reinigen und Absorbieren in zwei funktionelle Abschnitte aufgetrennt wird; und wobei das Material der hochtemperaturbeständigen Komponenten, die die kühlende Strömungsvergleichmäßigungsschicht bilden, ein hochtemperaturbeständiges anorganisches Material ist und die Füllkörper in der Reinigungsschicht (7) aus einem Polymermaterial bestehen.

2. Schiffrauchgas-Reinigungsvorrichtung gemäß Anspruch 1, **dadurch gekennzeichnet, dass** der Gaseinleitungsanschluss (3.2) innerhalb des Gehäuses ein Ausgang des Rauchgasleitungsrohrs (3) ist, das am Boden des Gehäuses (1) befestigt ist und sich in das Gehäuse (1) hinein erstreckt, und sich gegenüber dem Ausgang eine Flüssigkeitssammelabdeckung (14) befindet, um zu verhindern, dass Waschmeerwasser in das Rauchgasleitungsrohr (3) eintritt.

3. Schiffrauchgas-Reinigungsvorrichtung gemäß Anspruch 1, **dadurch gekennzeichnet, dass** der Gaseinleitungsanschluss (3.2) innerhalb des Gehäuses ein durchgehendes Loch in einer Seitenwand des Gehäuses (1) oder ein Ausgang des Rauchgasleitungsrohrs (3), das fest mit der Seitenwand des Gehäuses (1) verbunden ist, ist.

4. Schiffrauchgas-Reinigungsvorrichtung gemäß Anspruch 2, **dadurch gekennzeichnet, dass** das Flüssigkeitssammelbecken (15) fest aus einer unteren Seitenwand des Gehäuses (1), einem Boden des Gehäuses (1) und einer Rohrwand des Rauchgasleitungsrohrs (3) oder einer Trennplatte außerhalb der Rohrwand besteht.

5. Schiffrauchgas-Reinigungsvorrichtung gemäß Anspruch 3, **dadurch gekennzeichnet, dass** das Flüssigkeitssammelbecken (15) aus der Seitenwand und einem Boden des Gehäuses (1) unter einem horizontalen Querschnitt, wo eine Unterkante des Gaseinleitungsanschlusses (3.2) innerhalb des Gehäuses liegt, besteht.

6. Schiffrauchgas-Reinigungsvorrichtung gemäß Anspruch 1, **dadurch gekennzeichnet, dass** die Reinigungsschicht (7) Füllkörper und einen Füllkörpertragerahmen umfasst und der Füllkörpertragerahmen direkt oder durch Befestigungsteile an einer Innenwand des Gehäuses (1) befestigt ist.

7. Schiffrauchgas-Reinigungsvorrichtung gemäß Anspruch 1, **dadurch gekennzeichnet, dass** ein Wasserverteiler (8), der Waschmeerwasser in einem horizontalen und gleichmäßigen Verteilungsmuster nach unten ausströmt, oberhalb der Reinigungsschicht (7) befestigt ist und der Wasserverteiler (8) aus ausgerichteten Wasserrohren oder/und Wasserkanälen besteht.

8. Schiffrauchgas-Reinigungsvorrichtung gemäß Anspruch 7, **dadurch gekennzeichnet, dass** ein Nebelentferner (9) zum Entfernen von Nebeltröpfchen im Abgas oberhalb des Wasserverteilers (8) installiert ist.

9. Schiffrauchgas-Reinigungsverfahren unter Verwendung der Schiffrauchgas-Reinigungsvorrichtung gemäß Anspruch 1, **dadurch gekennzeichnet, dass** es die folgenden Schritte umfasst:
a. Einleiten von Rauchgas, wobei von einem Motor ausgestoßenes Rauchgas in einen Wäscher geleitet wird und bewirkt wird, dass das eingeleitete Rauchgas in dem Wäscher nach oben strömt;
b. Einspritzen von Waschmeerwasser, wobei das Waschmeerwasser aus einem Waschmeerwassereinlass, der sich oberhalb einer Reinigungsschicht des Wäschers befindet, in den Wäscher eingespritzt wird und bewirkt wird, dass das Waschmeerwasser in dem Wäscher nach unten fließt;
c. Waschen, wobei das Waschen im Gegenstrom dadurch erfolgt, dass das Waschmeerwasser, das von oberhalb des Wäschers eingespritzt wird, durch eine Reinigungsschicht mit Füllkörpern fließen gelassen wird, um mit Rauchgas niederer Temperatur, das nach oben strömt, in Kontakt zu kommen;
d. Abkühlen, wobei Rauchgas hoher Temperatur durch einen Kühler abgekühlt wird und das Waschmeerwasser durch den Kühler nach unten fließt, um die Temperatur des Rauchgases hoher Temperatur zu reduzieren, und dann das abgekühlte Rauchgas nach oben strömt und in eine Reinigungsschicht eintritt;
e. Ausleiten von sauberem Rauchgas, wobei nach dem Waschen sauberes Gas nach oben strömt und durch einen Auslass für gereinigtes Rauchgas ausgeleitet wird;
f. Ausleiten des Waschmeerwassers, wobei das Meerwasser nach dem Waschen in ein Flüssigkeitssammelbecken fällt und aus einem Meerwasserausleitauslass ausgeleitet wird.

10. Schiffrauchgas-Reinigungsverfahren gemäß Anspruch 9, **dadurch gekennzeichnet, dass** im Schritt des Ausleitens von sauberem Rauchgas (11) das Ausleiten des sauberen Rauchgases (11) dadurch erfolgt, dass bewirkt wird, dass das saubere Rauchgas (11) durch einen Nebelentferner (9) strömt, um Nebeltröpfchen in dem Rauchgas zu entfernen, und dann aus dem Auslass für gereinigtes Rauchgas (10) ausgeleitet wird.

11. Schiffrauchgas-Reinigungsverfahren gemäß Anspruch 9, **dadurch gekennzeichnet, dass** der verfahrensbedingte Druckverlust des Rauchgases kleiner als 110 Millimeter Wassersäule ist.

## Revendications

1. Dispositif de lavage pour gaz de combustion marins, comprenant un boîtier (1), une couche de lavage (7) ayant des garnitures fixées à l'intérieur du boîtier à une partie supérieure du boîtier, un récipient collecteur de liquide (15) avec une sortie de décharge d'eau de mer (16) se situant à l'intérieur du boîtier à une partie inférieure du boîtier, un tube de conduite pour gaz de combustion (3) pour conduire du gaz de combustion à laver de l'extérieur du boîtier (1) dans l'intérieur du boîtier, est lié à une paroi du boîtier (1), une extrémité du tube de conduite pour gaz de combustion (3) étant une entrée de gaz de combustion (3.1) à l'extérieur du boîtier, une autre extrémité du tube de conduite pour gaz de combustion (3) étant un port d'entrée pour gaz de combustion (3.2) à l'intérieur du boîtier, ledit port d'entrée pour gaz de combustion (3.2) se situant sur une paroi intérieure du boîtier (1) ou s'étendant dans le boîtier (1), et s'étendant entre la couche de lavage (7) et le récipient collecteur de liquide (15), un refroidisseur (4) pour refroidir un gaz de combustion ayant une température élevée (2), se situant dans un passage de gaz de combustion entre ladite entrée de gaz de combustion (3.1) à l'extérieur du boîtier dudit tube de conduite pour gaz de combustion (3) et la couche de lavage (7), une entrée d'eau de mer à lavage (12) se situant au-dessus de la couche de lavage (7), et une sortie de gaz pur (10) se situant dans une partie supérieure du boîtier (1) ; dans lequel
ledit refroidisseur (4) est une couche d'égalisation de courant refroidissante se situant entre ledit port d'entrée pour gaz (3.2) à l'intérieur du boîtier et la couche de lavage (7), et la couche d'égalisation de courant refroidissante est constituée de composants résistants aux températures élevées et est fixée ou installée au moyen de fixations sur une paroi intérieure du boîtier (1) ;
la couche d'égalisation de courant refroidissante comprend des garnitures résistantes aux températures élevées et un cadre de support de garnitures, et le cadre de support pour les garnitures résistantes aux températures élevées est fixé sur une paroi intérieure du boîtier (1) directement ou au moyen de fermetures, et
le dispositif de lavage pour gaz de combustion marins est disposé de telle manière que de l'eau de mer s'écoule vers le bas à travers la couche de lavage (7) et ensuite à travers le refroidisseur (4), à contre-courant vis-à-vis au gaz de combustion et en contact direct avec lui, pour réduire la température du gaz de combustion, puis le gaz de combustion refroidi va vers le haut pour entrer la couche de lavage, de manière à séparer le refroidissement et le lavage et l'absorption en deux sections fonctionnelles ; et dans lequel le matériau des composants résistants aux températures élevées qui forment la couche d'égalisation de courant refroidissante est un matériau inorganique résistant aux températures élevées, et les garnitures dans la couche de lavage (7) sont faites d'un matériau polymère.

2. Dispositif de lavage pour gaz de combustion marins selon la revendication 1, **caractérisé en ce que** ledit port d'entrée pour gaz (3.2) à l'intérieur du boîtier est une sortie du tube de conduite pour gaz de combustion (3) fixé à un fond du boîtier (1) et s'étendant dans le boîtier (1), et en face de la sortie, il y a un couvercle collecteur de liquide (14) pour prévenir l'entrée d'eau de mer de lavage dans le tube de conduite pour gaz de combustion (3).

3. Dispositif de lavage pour gaz de combustion marins selon la revendication 1, **caractérisé en ce que** ledit port d'entrée pour gaz (3.2) à l'intérieur du boîtier est un trou traversant une paroi latérale du boîtier (1), ou une sortie du tube de conduite pour gaz de combustion (3) connecté de manière fixe à la paroi latérale du boîtier (1).

4. Dispositif de lavage pour gaz de combustion marins selon la revendication 2, **caractérisé en ce que** ledit récipient collecteur de liquide (15) est constitué de manière fixe d'une paroi latérale inférieure du boîtier (1), un fond du boîtier (1), et une paroi de tube dudit tube de conduite pour gaz de combustion (3) ou une plaque de séparation à l'extérieur de la paroi de tube.

5. Dispositif de lavage pour gaz de combustion marins selon la revendication 3, **caractérisé en ce que** ledit récipient collecteur de liquide (15) est constitué de la paroi latérale et un fond du boîtier (1) sous une section horizontale où un bord inférieur du port d'entrée pour gaz de combustion (3.2) à l'intérieur du boîtier est situé.

6. Dispositif de lavage pour gaz de combustion marins selon la revendication 1, **caractérisé en ce que** la couche de lavage (7) comprend des garnitures et un cadre de support de garnitures, et le cadre de support de garnitures est fixé sur une paroi intérieure du boîtier (1) directement ou au moyen de fermetures.

7. Dispositif de lavage pour gaz de combustion marins selon la revendication 1, **caractérisé en ce qu'**un distributeur d'eau (8), qui fait écouler de l'eau de mer de lavage vers le bas dans un schéma de répartition horizontal et uniforme, est fixé au-dessus de la couche de lavage (7), et le distributeur d'eau (8) est constitué de conduites d'eau ou/et cours d'eau alignés.

8. Dispositif de lavage pour gaz de combustion marins selon la revendication 7, **caractérisé en ce qu'**un dévésiculeur (9) pour éliminer des gouttelettes de liquide dans les gaz d'échappement est installé au-dessus du distributeur d'eau (8).

9. Procédé de lavage pour gaz de combustion marins en utilisant le dispositif de lavage pour gaz de combustion marins selon la revendication 1, **caractérisé en ce qu'**il comprend les étapes consistant à :
a. introduire du gaz de combustion, dans lequel du gaz de combustion rejeté par un moteur est introduit dans un épurateur, et le gaz de combustion introduit est forcé à passer vers le haut dans l'épurateur,
b. injecter de l'eau de mer de lavage, dans lequel l'eau de mer de lavage est injectée dans l'épurateur à partir d'une entrée d'eau de mer de lavage se situant au-dessus d'une couche de lavage de l'épurateur, et l'eau de mer de lavage est forcée à s'écouler vers le bas dans l'épurateur,
c. laver, dans lequel un lavage à contre-courant est réalisé en faisant s'écouler l'eau de mer de lavage, qui est injectée du dessus de l'épurateur, à travers une couche de lavage avec des garnitures pour contacter du gaz de combustion à basse température qui va vers le haut,
d. refroidir, dans lequel du gaz de combustion à haute température est refroidi par un refroidisseur, et l'eau de mer de lavage s'écoule vers le bas à travers le refroidisseur pour réduire la température du gaz de combustion à haute température, et puis un gaz de combustion refroidi va vers le haut pour entrer une couche de lavage,
e. évacuer du gaz de combustion pur, dans lequel du gaz pur, après être lavé, va vers le haut et est évacué à travers une sortie pour gaz de combustion lavé,
f. décharger l'eau de mer de lavage, dans lequel l'eau de mer, après être lavée, tombe dans un récipient collecteur de liquide et est déchargée à partir d'une sortie de décharge d'eau de mer.

10. Procédé de lavage pour gaz de combustion marins selon la revendication 9, **caractérisé en ce que** l'évacuation du gaz de combustion pur dans l'étape consistant à évacuer du gaz de combustion pur (11) est réalisée en forçant le gaz de combustion pur (11) à passer à travers un dévésiculeur (9) pour éliminer des gouttelettes de liquide dans le gaz de combustion, et puis en l'évacuant à partir de la sortie de gaz de combustion pur (10).

11. Procédé de lavage pour gaz de combustion marins selon la revendication 9, **caractérisé en ce qu'**une perte de pression opérationnelle du gaz de combustion est moins de 110 millimètres de colonne d'eau.
